# EUROPEAN PATENT SPECIFICATION

(11) **EP 1 635 328 B1**
(45) Date of publication and mention of the grant of the patent: **30.05.2018**
(21) Application number: 04104438.9
(22) Date of filing: 14.09.2004
(51) Int. Cl.: G10L 15/24, G10L 15/28, H04M 3/493

(54) **Speech recognition method constrained with a grammar received from a remote system.**
Verfahren zur eingeschränkten Spracherkennung mit einer von einem entfernten System empfangenen Grammatik.
Méthode de reconnaissance de la parole limitée avec une grammaire reçue d'un système distant.

(43) Date of publication of application: 15.03.2006
(73) Proprietor: Swisscom AG, 3050 Bern (CH)
(72) Inventor: Van Kommer, Robert, 1752, Villars-sur-Glâne (CH); von Niederhäusern, Hans, 3074, Muri bei Bern (CH)
(74) Representative: P&TS SA (AG, Ltd.)

(56) References cited:
- EP-A- 0 961 263
- EP-A- 1 400 953
- US-A- 4 866 778
- US-A1- 2003 004 722
- US-A1- 2003 115 057
- US-B1- 6 408 272
- US-B1- 6 424 945

## Description

### Technical Field

The present invention relates to speech recognition methods and autocompletion methods. The present invention also relates to automatic directory services.

### State of the art

Automatic directory services are about to be launched by many telecommunication companies. In those services, a speech recognition system is used for recognizing the queries submitted by the callers, and a speech synthesis system speaks the answers to those queries. The queries usually include free text questions asking, for example, the phone number of a specific person at a specific place, or for retrieving a name and address on the basis of a known phone number.

Current automatic speech enabled directory services often use speaker independent speech recognition methods, which despite impressive progress made during recent years still provide recognition rate inadequate for recognition of larger lexicon in noisy, limited bandwidth environments.

Speaker dependent speech recognition systems have also been suggested for automatic directory services and for other services. Speaker dependent systems store different speech models, for example different phone or triphone models, for each speaker. By taking into account speech variability among speakers, those systems thus allow a much better recognition rate. Speaker dependent systems however require a training session and/or on-the-fly adaptation of the speech models; a poorly trained or adapted speaker dependent system will not perform better than a speaker independent system. Services and automatic directory systems that are only accessed infrequently thus will not have the opportunity to adapt the centrally stored speech models to the speaker and will not perform in a satisfactory way.

In order to alleviate those drawbacks, solutions have already been suggested in which the speech recognition engine is run in the speaker's equipment rather than in a remote system. Current mobile user equipments, inclusive PDAs or smartphones for example, have a sufficient processing power and memory capacity for executing state of the art speech recognition softwares. The main advantage is that the speech models are adapted each time the user uses the local speech recognition engine - independently of the service or application to which the engine may be connected. Thus common speech models are used and adapted for different services, so that the adaptation rate of the models is much faster. Furthermore, those systems do not need to transfer speech signals to a remote recognition engine, thus reducing the volume of data transferred, the communication costs, the processing time and the interaction latency.

Modern speech recognition systems however do not only rely on speech models, i.e. models for the phonemes or triphones of the speech signal, but also on voice and/or language grammars defining expectations about words, or even sentences, that may be spoken at a given stage in a voice dialogue. For example, when the dialogue manager in an automatic directory system prompts the user to enter the name of a city, it will expect the user to speak an existing city name. The recognition process will thus be dramatically improved by restricting the comparison of the spoken input to city names indicated in a lexicon. For example, if a Viterbi decoder is used for determining the name which has most likely been spoken, the probability of mistakes and the search time will both be reduced if the search is restricted to names existing in the lexicon.

While modern equipments may have enough memory for storing large dictionaries of city and person names, problems arise when the content of the dictionaries frequently changes. For example, in a typical automatic directory application, person records are added, removed or updated every day. Accordingly, the speech recognition grammar will need continuous adaptation. A speech recognition system based on static dictionaries and locally stored speech recognition grammars is likely to become rapidly obsolete.

It could be possible for some services to synchronize a local speech recognition grammar with a remotely stored grammar, whereas the synchronization process may be performed periodically or each time the service is accessed, for example. However, this solution would only be feasible for relatively small grammars; transferring huge grammars, for example the complete list of subscribers in a national directory system, to a plurality of speaker equipments, would imply tremendous transmission time and costs.

Other systems use a local speech recognition engine, performing fast, and speech models, inclusive speech recognition grammars and phone / triphone models (which are sometimes referred as subgrammars) downloaded from a remote server. The aim is to use up-to-date grammars, and to avoid permanent storage of complete grammars in each equipment. Those solutions however require transferring at least the complete top-level grammar at the start, which may be impossible for many applications. Furthermore, remotely stored speech models (HMMs, phone models) will only be adapted when the speaker accesses this service, and not when he accesses another speech recognition based service.

Still other systems use so-called distributed speech recognition methods, in which speech features are extracted on the local speaker equipment and sent, instead of the speech signal itself, to a remote, network-based system for further processing and recognition. The aim is to reduce the amount of data sent to the remote system; however, the recognition is still speaker independent and specific to the application accessed through the remote recognition system.

Another drawback of speech based automatic directory services is the speech recognition process itself. Speech is not the preferred way of interaction with equipments for all users, or not in all circumstances. Some users prefer to type in letters, even if their equipment only features a small keypad; some users would prefer a keypad, a keyboard or a touchpad, or any other kind of haptic interface, for example, each time a reliable recognition is difficult, for example when the recognition system has to distinguish between similar phones, for example between the similarly sounding consonants "b" and "p" or, at restricted bandwidth, "f" and "s". In order to provide the maximum convenience to all users in all situations, multimodal input systems allowing users to choose either voice or a keyboard for entering a requested name have thus already been suggested. However, typing names, such as family names, is time-consuming, error-prone and implies at least that the user knows how to spell the name. Improvements are only possible with spell-check system algorithms for finding similar sounding names and autocompletion methods, which however all rely on existing dictionaries that are impossible to maintain up-to-date in a local equipment.

According to EP-A-0 961 263, speech recognition can be limited to a smaller number making use of commands given by a user. By means of a method and device, it is also possible to activate a speech recognition device by making use, in the activation, of an existing keyboard or a touch-sensitive screen of the device. The method provides the user with a logical way to activate the speech recognition device in the device simultaneously providing an improved capacity of the speech recognition device. It is also possible to carry out the speech recognition process by making use of commands given by the user irrespective of how the speech recognition device itself is activated. According to an embodiment the device comprises a touch-sensitive screen or surface, in which case the information about a single letter or several letters written on the screen is transmitted to the speech recognition device, whereupon speech recognition is limited to words, wherein the letters in question occur. Speech recognition is most preferably limited to a name beginning with the letter written on the touch screen by the user.

US-B1-6 424 945 discloses a system and method for voice browsing IVR services using a mobile terminal. A voice application is accessible via a server connected to a network. A call connection is established between the mobile terminal and the server using a dual-mode connection. The call connection includes a voice mode and a data mode for alternately transmitting voice and data via the network. The voice application sends a state-dependent grammar that defines the speech recognition results that the voice application is ready to accept as input or commands at its present state of execution. The voice application also sends to the mobile terminal state-dependent voice output such as audio prompts and instructions using the voice mode. The user responds orally to the voice output. The mobile terminal processes this voice input using speech recognition facilities. Valid input is extracted from the voice input based on the state-dependent grammar. The mobile terminal sends the valid input to the voice application using the data mode. The voice application updates its state of execution based on the valid input.

US-B1-6 408 272 discloses a distributed voice user interface system which includes a local device which receives speech input issued from a user. Such speech input may specify a command or a request by the user. The local device performs preliminary processing of the speech input and determines whether it is able to respond to the command or request by itself. If not, the local device initiates communication with a remote system for further processing of the speech input.

US-A-4 866 778 dsicloses a speech recognition system which can perform multiple recognition passes on each word. If the recognizer is correct in its first pass, the operator may abort later passes by either pressing a key or speaking the next word. Otherwise, the operator may either wait for a second recognition pass to be performed against a larger vocabulary, or may specify one or more initial letters causing the second recognition pass to be performed against a vocabulary substantially restricted to words starting with those initial letters. Each time the user adds an additional letter to the initial string, any previous recognition is aborted and the re-recognition process is started anew with the new string. If the user types a control character after the initial string, then the string itself is used as the output of the recognizer.

### Summary of the invention

It is therefore an aim of the invention to provide an improved speech recognition method that alleviates the above-mentioned problems of the prior art.

It is another aim of the invention to address the case of local speech recognition, run on the mobile speaker equipment and with locally stored speech models, for accessing large databases, such as directory listings, which need to be stored at a central location for memory and updating reasons.

According to the invention, the speech recognition method for recognizing a word input in a speaker equipment comprises the steps of:
determining in said speaker equipment one or more symbols, wherein said one or more symbols is one or more of a letter, a numeral, an ASCII symbol, a speech segment derived from a speaker utterance or a speech feature derived from a speech segment derived from a speaker utterance, sending said symbols to a remote system,
receiving from said remote system a grammar corresponding to a limited set of words depending on said symbols,
recognizing said word in said speaker equipment using a speech recognition method constrained with said grammar.

This method has the advantage that while the word is recognized locally, i.e. in the speaker equipment, the grammar used by the method is received during the recognition process from a remote system, which is much easier to maintain up-to-date.

The method further has the advantage that only a limited grammar need be transferred from the remote system, i.e. the grammar corresponding to a limited set of words which is retrieved from the full lexicon in the remote system depending on previously determined symbols.

An advantage of running the speech recognition locally, in the speakers' equipments, is that no central dedicated platform needs to be deployed. The scalability of the solution is thus given for free. Obviously, the dynamic download of grammars still has to be performed by the central system; however, this only occurs when the grammars are too big, or to variable, to be installed at the start. Furthermore, having a local speech engine and speech application module allows a consistent and unified user interface to be designed for several applications accessing different servers. Sharing the speech recognition license costs among several services further reduces the cost for deployment of each service. In addition, performing the speech recognition locally enables use of the full available bandwidth, instead of the usual 4kHz used by compressed speech on end-devices, and solves the problems due to network disturbances and distortions.

In a preferred embodiment, the symbols used for selecting the partial grammar transferred from the remote system comprise letters of the word to recognize, for example the first or several first letters, which may be entered manually, over an haptic interface, by the user, spelled, or recognized. An autocompletion method is then used in the remote system for building a speech recognition grammar corresponding to words beginning with those letters.

The symbols used may additionally comprise fields recognized previously during the same session. For example, in an automatic directory system, the grammar for subscriber names may be restricted to names of subscribers existing in a city whose name has been previously determined.

In a preferred embodiment, a list of possible candidates for the word the recognition engine is trying to recognize is determined in the remote system, transferred to the speaker equipment, and displayed on a visual interface of said speaker equipment. The speaker can then make a choice among this list.

In a preferred embodiment, a list of possible candidates for the word the recognition engine is trying to recognize is determined in the remote system, transferred to the speaker equipment, and used by a spell check system in said speaker equipment for correction of already entered letters or for suggesting similar sounding names.

The method of the invention enables a mobile equipment speaker to type only a few letters or to speak the first phonemes of a word in order to retrieve a short match list of candidate names extracted out of a remote, up-to-date database. The user can then proceed further by selecting (by voice, stylus, scroll keys, keypad, or any kind of haptic interface) the desired word from the list. The remote database server provides hierarchical access table and the list retrieved from each table is further reduced when new letters are typed or new phonemes are recognized by the local speech recognition system. When a combined multimodal interaction is used, lists are even further drastically reduced by using both input streams (voice stream and character stream).

In the present patent description and claims, the expression grammar is used to define a list of potentially valid words or text portions. Grammars are used in speech recognition systems to define words or text portions, among all the words existing in a lexicon, that a speaker can pronounce at a given stage of the dialog. The grammar is preferably stochastic and includes a priori probabilities of each word in the list may be included as part of the grammar, and indicate the probabilities of each word to be pronounced at the current stage of the dialog.

In the present patent description and claims, the expression symbol is used to define any piece of information entered by the user/speaker and that may be used by the speech recognition system and/or by the remote system in the recognition process. Symbols may be entered manually, over a haptic interface, and corresponds to letters, numerals or ASCII symbols for example, possibly with an associated probability. Other symbols may also be derived from a spoken utterance and correspond in this case either to a speech segment, transmitted at a rate of 6kkBit/s for example, to speech features derived from those speech segments and transmitted at a rate of about 5kBit/s, or preferably to acoustic symbols which are decoded from those features and may be transmitted at a much lower rate, for example 0.5 kBit/s. In a preferred embodiment, the invention uses both symbols derived from a haptic interface and acoustic symbols derived from spoken utterances. Acoustic symbols may correspond to phonemes or triphones, for example, or preferably to n-best phonemes (with n>=1), for example to the two or three best phonemes, with associated acoustic distances and/or probabilities.

### Brief description of the drawings

The invention will be better understood with the help of the description of a specific embodiment illustrated by the figures in which:
Figure 1 illustrates a speaker equipment with a multimodal interface during the method of the invention.
Figure 2 illustrates in block-diagrammatic form the general structure of a speech recognition system according to the invention.
Figure 3 illustrates a possible structure of a hierarchical database according to the invention.
Figure 4 illustrates a possible way to define word grammars and word lists.

### Detailed description of the invention

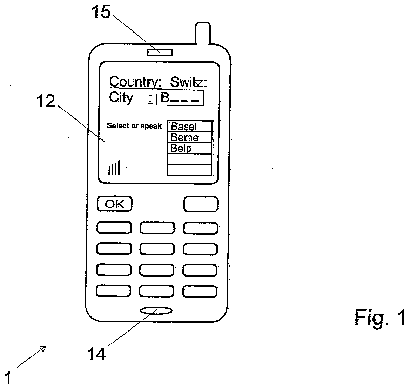

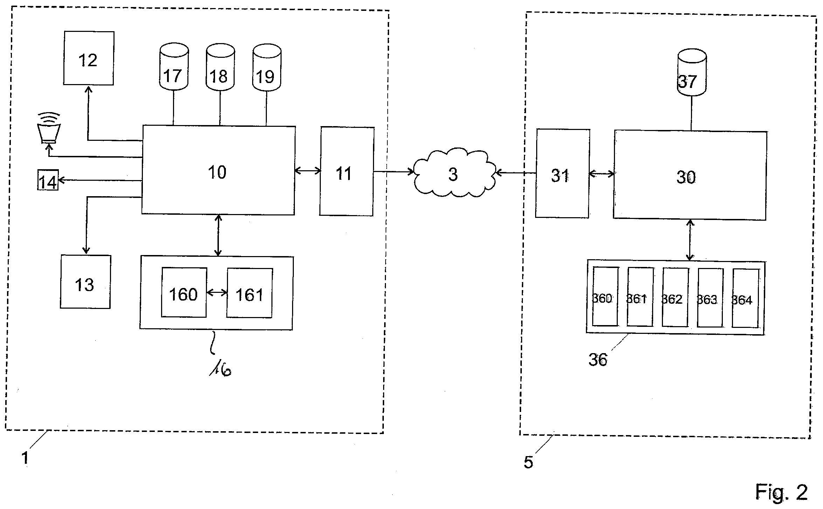

Figure 2 illustrates in block-diagrammatic form the speech recognition system of an embodiment of the invention. The system comprises one remote system 5, for example a server as part of the infrastructure of a public telecommunication network, or as part of the infrastructure of a value-added service operator, and a plurality of speaker equipments 1, of which only one is illustrated on Figure 1, which can access the remote system 5 over a public telecommunication network 3, for example a public switched mobile network, a mobile network, or a packet network such as the Internet.

The speaker equipments 1 may include mobile equipments, such as the mobile cell phone illustrated on Figure 1, or a fixed terminal. Each equipment preferably comprises one processor 10 and a memory 16 in which a plurality of application programs or modules, such as a dialogue manager 160, a speech recognition engine 161, etc., may be stored to be executed by the processor 10. The processor 10 further can access output means, such as a display 12 and a loudspeaker 15, and input means, including for example a keypad or keyboard 13, a microphone 14, a jog wheel, a mouse, a stylus, a tactile display, other types of haptic interface, etc. One or several databases 17, 18, 19 are available for storing, respecttively, speaker dependent hidden Markov models (HMMs), local grammars, and/or other conditions. The databases 17-19 may also be stored in the memory 16. The HMMs in the database 17 are speaker dependent and adapted during an initial training session and/or on the fly, each time the speech recognition system is used. A typical footprint of approximately 700kB should enable sufficient recognition accuracy on many mobile devices. The speaker equipment 1 further comprises a multimodal interface 11 for sending and receiving voice and data to respectively from the network 3. Voice and data can preferably be sent or received simultaneously in different, concurrent streams. In an embodiment, the voice channel may be connection based whereas the data channel may be connectionless; other arrangements are possible, depending on the technology and type of network. Other components and/or application programs may be available as part of the speaker equipment 1. Furthermore, the speaker equipment 1 may be made up of a plurality of mutually interconnected equipments, for example equipments interconnected over a personal area network (PAN) such as a Bluetooth network.

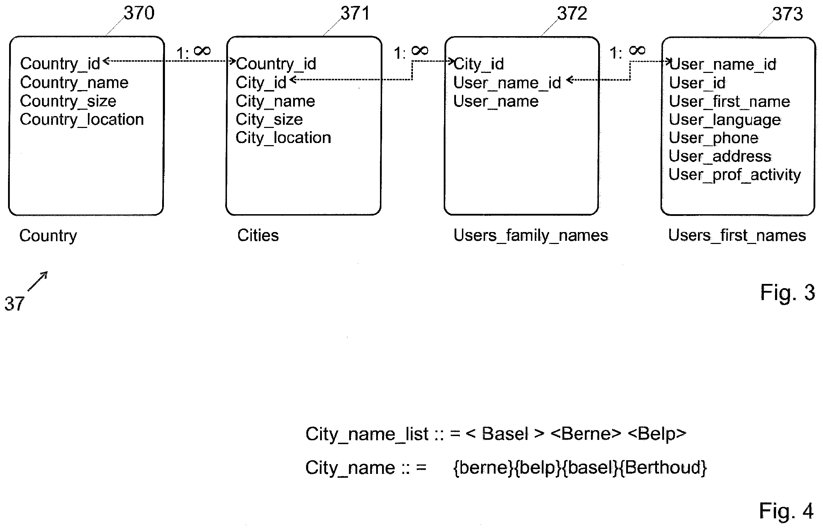

The remote system 5 preferably comprises one processor 30 and a memory 36 in which a plurality of application programs or modules, such as an autocompletion engine 360, a user location determination module 361, a user identification module 362, a close match determination module 363 and/or a grammar building module 364, for example, may be stored and executed by the processor 30. Processor 30 further can access a database 37, preferably a relational database for storing and handling an application dependent lexicon, preferably including probabilities associated with each word. An example of structure for the database 37 will be discussed below in relation with Figure 3. The remote system 5 can further comprise an interface 31 for sending and receiving at least data to respectively from speaker equipments 1 over the network 3. Other components and/or application programs may be available as part of the remote system 5. Furthermore, the remote system 5 may be made up of a plurality of mutually interconnected equipments, for example a plurality of servers in one or several computer domains.

Figure 3 illustrates an example of structure of the relational database 37 for an automatic directory service application. This structure is preferably achieved with a relational database such as, for example, Microsoft SQLServer© or Oracle©, but may also be achieved with .XML data repository structures, for example. In a preferred embodiment, the remote system 5 comprises a Web server offering web services over a SOAP XML interface protocol.

In the illustrated embodiment, the database 37 comprises a first table 370 for country names, in which country names as well as other country dependent data, such as the country size (for example number of subscribers), country location (for example continent, coordinates, etc.) are stored.

A second table 371 stores city dependent data, such as city names, city size (for example number of subscribers), city location (for example coordinates) together with an identifier Country_id for establishing a one to infinite database relation with the country table 370.

A table 372 stores subscriber, dependent data, such as subscriber names, together with an identifier City_id for establishing a one to infinite database relation with the city table 371.

A table 373 stores data sufficient for identifying unambiguously each individual subscriber, together with the other tables 370 to 372. In the simplified example illustrated, the unique identifier is made up of the subscriber's first name, which, together with the subscriber's family name, city and country, is sufficient for identifying unambiguously most subscribers. More identifying data may of course be needed when several subscribers in the same city share a common surname and first name. Table 373 stores other subscriber specific data, for example the subscriber's preferred language, subscriber address, subscriber phone number, email address, web page, fax number, additional phone number, etc.

The database structure illustrated by way of example on Figure 3 thus allows the efficient retrieval of subscriber data by entering, successively, the country, city and subscriber names. Knowledge of one field (for example knowledge of the country name) can be used to reduce the perplexity of the search in subsequent tables. For example, knowledge of the country name allows the number of city names that may be validly entered by a caller to be reduced, thus reducing the perplexity of the word recognition system, and allowing the system of the invention to compute lists of possible candidates for a given field. Furthermore, as will be described below, the incremental access to the database content is further defined at the symbol level: when a few letters are typed in, or spelled, or determined in any other way, the number of remaining city names is often reduced to a short list that can be displayed on the speaker equipment display 12.

Other database structures and database queries may be provided for allowing the retrieval of subscriber information according to other criteria. For instance, a caller can request the address corresponding to a given phone number (reverse directory).

We will now describe an embodiment of the method of the invention.

A user of the personal equipment 1, for example a mobile phone or PDA, starts an application 160 or service with the mobile equipment. The application/service may be run locally (in the speaker's equipment 1) or in a remote server, but will use a local speech recognition engine 161 and access a remote database 37. The application may be started for example by speaking the application/service name, by selecting its name in a menu, or by pointing on its icon on the equipment graphic user interface. On-line help and/or visual and/or audio advertisements may be provided when the application is launched. In a preferred embodiment, the user starts a local automatic directory application 160 using a remotely stored directory database 37.

The speaker equipment 1 starts a session with the remote system 5. To properly operate the interaction procedure, the speaker-equipment preferably informs the remote system 5 about its available hardware and software capabilities and settings. The module 362 in the remote system recognizes the mobile equipment, or the user of the mobile equipment (for example using a caller line identification function, a SIM card or a speaker recognition module) and starts a new session for the caller.

The session starts with a form displayed on the display 12, for example with the form illustrated on Figure 1. The form may comprise advertisements. A voice menu may be provided instead of, or in addition to, the visual form.

The user then enters symbols over the multimodal interface 11 to fill the various forms. The user may for example select a country name. In an embodiment, for national directory services, this step may be implicit. In the second step illustrated by Figure 1, the user decides to enter a city name. The user can preferably select the field (in this case the city name field) he wants to fill first, using for example a voice command, his stylus, or any other manual input means.

The remote system 5 then extracts from the database 37 all possible city names in the implicit or explicit selected country, and builds two lists: one for the speech grammar and the other one for manually input symbols. Some city names, for example the most frequently requested names, the names of the biggest cities, the name of the city in which the caller is currently or usually located, neighboring cities, or names of cities he frequently requests, may already be sent to the speaker's equipment 1 and displayed or spoken to the user.

The speaker then pronounces the requested city name, for example "Berne", and may simultaneously enter or select over the haptic interface the letter "B". This starts the speech recognition engine 161 in a specific thread in the speaker's equipment, which tries to recognize the input speech using speaker dependent, locally stored speech models, for example HMMs for modeling phonemes, triphones or other basic speech elements.

The first few letters of the requested city may be typed on a keyboard or selected in a menu, handwritten on a touchpad, spoken or spelled. In an embodiment, letters may be entered on the keys of a keypad, each key being associated with a set of several letters. For example, a single key of a mobile phone may be associated with any of the symbols "2", "A", "B" and "C". Other types of haptic interfaces may be used.

The speaker equipment 1 then determines that the first letter of the requested city name is a "B" - either because the user has manually entered or selected a "B" on the interface, or because a "B" could be recognized from the speaker's utterance by the local speech recognition engine 161. If the symbol has been entered on a keypad, the speaker equipment can still determine that the first letter is one of "1", "A", "B" or "C". This symbol (or list of symbols) is preferably compressed with a Huffmann code and sent through the multimodal interface 11 to the remote system 5. In a preferred embodiment, the speaker equipment 1 sends both the symbol entered over the haptic interface, possibly with an associated probability, and an acoustic symbol, for example the n-best phonemes with associated distances, derived from speech features extracted from the speaker's utterance. Symbols from the haptic interface may be sent at irregular intervals, for example each time a key has been pressed, whereas acoustic symbols may be sent over a different stream in a synchronous mode, for example each 10 ms, when the corresponding channel is open.

Preferably, other conditions that may help the remote system 5 determine the name of the requested city may be sent to the remote server along with the symbol "B" - for example other letters of the requested name, list of previously requested names, location of the speaker, information from the speaker's personal local phone directory, etc. A probability and/or distance may be associated to the symbols sent; this probability will be 100% for symbols entered manually (or less if typing and spelling mistakes are taken into account, or if the letter has been handwritten), and somehow lower, depending on the reliability of the speech recognition, for acoustic symbols.

The remote system 5 uses received symbols, for example the input letter "B" and/or the corresponding n-best phonemes, along with other conditions to build a request for the database 37 in order to retrieve from the table 371 a list, shown on the upper part of Figure 4, of all city names in the given country that start with that letter "B" and obey the other conditions. The list may contain cities starting with a different letter if the letter "B" has been associated with a probability lower than 100%. For example, if the received acoustic symbol corresponds to the phonemes "B" and "P" with associated distances, the list may contain cities starting with "P".

In order to rank the resulting list retrieved from the database, the remote system 5 preferably builds a stochastic grammar in which a probability is associated to each city in the list; this probability may depend on the size of the city, on the distance between this city and the present or usual location of the caller, on previous requests made by this caller, on other conditions sent by the caller, on the acoustic distance between each candidate and the transmitted utterance, etc. In the illustrated example, the city of Basel, which is bigger than Berne, has a higher probability of being selected and thus a higher rank. Some of the most likely city names are preferably already sent in text mode to the speaker's equipment 1 and displayed in a list on the display 12, as shown on Figure 1 in which three city names are displayed. The first line of Figure 4 shows an example of the variable city_name_list that may be sent to the speaker's equipment to indicate a list of possible candidates. City names are preferably formatted (case sensitive, possibly with postal or area codes) in order to be displayed in the form expected by the user.

At the same time, the grammar-building module 364 in the remote system 5 creates a specific speech recognition grammar to define cities, among all the city names existing in the table 371, that the system expects at this stage. The list of city names in the speech recognition grammar may be different, preferably larger, than the short list sent for display. Furthermore, as illustrated on the second line of Figure 4, the names in the grammar are preferably not formatted. The grammar may for example be expressed in a compact form, such as the Backus-Naur Form illustrated on Figure 4, and sent as another text message to the speaker's equipment 1. Probability may also be associated to the names in the speech recognition stochastic grammar.

The close match determination module 363 may add other city names in one or in both lists, especially when some symbols or letters received from the speaker equipment 1 have been associated with probabilities less than 100%. The aim of the module 363 is to correct recognition mistakes, but also possible spelling or typing errors, and to enlarge the list with close distance solutions. A Levenshtein algorithm could be used to measure the closest potential candidates. In the case of speech recognition of spelled letters, this algorithm may be replaced or completed by a partial N-Best Viterbi decoder.

If the input acoustic stream has been sent to the remote system 5, this system may further associate to each city name in the grammar a probability that depends not only on the a priori probability of having this name selected, but also on the acoustic distance between the spoken name and city name.

As soon as the speaker has finished to speak the city name (Berne in this example), or even before, a short list is displayed on the display 12 starting with e.g. Berne, Belp, Basel, etc.

The user may then select over the haptic interface a city name, for example the name of "Berne", in the displayed short list. Alternatively, the speech recognition engine 161 in the speaker equipment tries to recognize the previously input word "Berne" using the speech recognition grammar just received from the remote system and the locally stored HMMs. The recognition may be performed with a Viterbi decoder using both the acoustic symbols derived from the spoken utterance and the symbols, for example the letters, manually input by the user. In the above mentioned example, the search in the Viterbi array may be faster, and more reliable, if the decoder uses the manually input symbol "B" to constrain the search.

If the name of Berne can be recognized among all candidates by the speech recognition module in the list with a sufficient level of confidence, this name will be automatically selected. A written and/or spoken message may be delivered by the equipment 1 for requesting an explicit (spoken or selected) confirmation when the user selects a city different from the best match in the list, or when the level of confidence for the speech recognition is not sufficient.

The selection "Berne" is then sent as a text message to the remote system 5, which then prepares a request to retrieve a list of all family names available in the city of Berne. A first list is intended for display and manual selection whereas a second list is for a speech recognition grammar; as for the city names, family names may be associated with probabilities. Both lists are sent to the speaker equipment 1.

The user then speaks the requested family name, for example "Hofmann", while at the same time being given the possibility of selecting the desired name from the displayed short list. He may spell, type or select further symbols "h", "o", "f" that will be sent to the remote system to retrieve a shorter list, until the name "Hofmann" has been recognized with a sufficient confidence level or until this name has been selected in the reduced short list.

The short list that can be prepared when only the first few letters of the family names have been determined is still too large to be sent in a reasonable time to the speaker's equipment 1. In this case, the first list to be displayed or used for the speech recognition grammar may be reduced to the most likely family names (for example, common family names, or family names often called). Only when four letters have been given can the short list be reduced sufficiently to be sent and displayed without restrictions by the equipment 1. The list can also be enlarged by the module 363 to take into account possible recognition, spelling or typing mistakes. In an embodiment, transmission and display of the short list is delayed until the number of candidates is short enough, whereas the acceptable limit may depend on the available bandwidth and on the capabilities of the user equipment. The remote system 5 may also senses the capabilities of the speaker equipment 1 and/or of the network 3 and decides to stop the process of the invention, or to suggest appropriate measures to the user, for example the download of a plug-in, for example an applet.

This multimodal interaction is further used until the requested subscriber has been unambiguously identified. The remote system 5 can then send to the speaker equipment 1 data entries, for example the requested phone number, address, e-mail address, web address, etc., together with some optional advertisements.

The application 160 in the speaker equipment 1 then asks the user if he wants to store this new entry in his local directory (contact list), and furthermore if he wants to directly call that person now. At this point, the remote system may also invoice the transaction, for example though a CDR (call detail record) if the database is operated by a network operator, or by debiting a prepaid or postpaid user account.

The speech recognition engine may also adapt the speaker dependent speech models in the HMM database 17, using the temporarily stored speaker utterance, the selected word which actually corresponds to this utterance, and a known speech model adaptation method.

The remote system 5 thus determines at each stage of the dialogue two short lists of candidate words for the field the user is filling. Each list may be based on the symbols input over the haptic interface and/or on the acoustic symbols derived from the spoken utterance. The first short list is displayed on the speaker equipment display 12, or spoken to the user over a voice menu, and allows a quick selection of a word in the list, for example using a stylus, a keypad, a keyboard, a jog wheel, an haptic interface, etc. The second list is a speech recognition grammar and is used by the speech recognition engine of the speaker's equipment to help the recognition process. In an embodiment, a common list may be used for both functions; in a preferred variant, two distinct lists, including different names, a different sorting of the names in the list, different formats for the names and/or different sets of additional information are determined and sent to the speaker's equipment. New lists are determined and sent each time a new criterion, for example a new symbol or a new condition, is known either in the speaker equipment or in the remote system.

The short lists are preferably adapted to the speaker equipment's capabilities, which may be retrieved from a user profile defined during registration in the remote system 5 and/or transmitted to this system during the session. For example, the number of names in the displayed short list may depend on the size and resolution of the display 12: it is pointless to display a huge number of names on a tiny display. Similarly, the number of names in the grammar may depend on the processing capabilities of the speaker equipment. Thus the number of names in the short list for display and in the grammar may be limited to a maximal value depending on the speaker equipment and on the currently available bandwidth. Furthermore, the short list for selection and/or the speech recognition grammar may be transmitted to the speaker equipment only when their size is compatible with the network bandwidth and/or with the user's equipment capabilities which may have been previously determined using a sensing protocol.

The short lists sent by the remote system are preferably used as such by the speaker equipment; i.e., all the names in the first list are displayed and the speech recognition engine will compare the input utterance with all the candidates in the speech recognition grammar. In an embodiment 1, one or both lists may be further restricted in the speaker equipment, for example in order to take into account additional conditions, user settings and preferences, or restrictions to the display or computing capability of the speaker's equipment 1.

In the case of a single field database access, such as a phone number input necessary for accessing the owner's address in a reverse directory service, a phone number list will be defined by the remaining phone numbers given the already typed, selected or spoken digits. That list of possible matches is presented with a ranked order; the a priori likelihood of requested phone number, and possibly the acoustic distance between the speaker's utterance and each candidate, is used for determining the rank order. Most frequently, recently requested, or acoustically close phone numbers are listed first whereas remaining numbers are presented at the bottom of the list, or not presented at all.

In the case of a field with a small grammar, or at least of a field with an unvarying grammar, for example a field requesting a yes/no answer, the speech recognition engine may use a locally stored grammar, thus allowing a faster recognition and a reduction of the amount of data transferred.

At each stage during the dialogue, the user is free to choose a preferred interaction mode or any combination of them (haptic interface, for example pointing device, keyboard, numerical or multi-function keypad, jog wheel, mouse, spoken output, handwriting, visual output, etc.).

On many speaker equipments, including mobile end-devices, the environment is often too noisy for accurate speech recognition; therefore multimodal interaction often uses a push-to-talk mechanism. In the method of the invention, the audio channel may be automatically opened after display of the prompt, or at the latest when the user points to the first letter of the word to be spoken, and/or automatically closed after the user releases the pointing device, or after a spoken input has been recognized. In an embodiment, the user can type several keys while speaking and the audio channel is closed when the input has been recognized.

In order to reduce the memory storage and the transmission time or bandwidth requirement, the letters/phonemes to transmit between the speaker's equipment 1 and the remote system 5, and vice-versa, are preferably compressed and for example mapped to symbols. Further symbol compression may be achieved by coding the symbols according to their occurrence frequency in the database 37, using for example a Huffman coding scheme or any suitable scheme.

As already mentioned, several database fields may have at least one associated distance metric or other location information which may be used for computing the distance between some location reference (for example, the location of the speaker) and the location associated with the field. This distance may be used for determining a probability of a user selecting a specific country, city, or person; close users are much more frequently requested than remote ones.

Other distances than geographic distances may be determined in advance, or preferably computed on the fly by the remote system 5 during the recognition process, for example:
Database clusters, defined by a database field or self-learned from the data. For instance, in directory assistance services, professional activities may be clustered; a distance is then considered close when two people have professional activities belonging to the same cluster.

Access to the database 37 may be billed to the requesting users. In an embodiment, the requested information (for example the phone number of the requested subscriber) is packed into an SMS sent and billed to the user of the equipment 1. A more flexible billing system may be provided by IP-billing or CDRs (Call Detail Records); in this case, each request to the server 5, and/or each answer, is potentially a billing event. Finally, the financing of the database server may be realized over third party advertisements displayed when the user accesses the system, when he selects items in the display list, or with the answer to the request. The advertisements are preferably related to the selected items. Appearance in a display list may also be charged to advertisers; for example, a restaurant may pay for having its restaurant always appearing on top of the list when a user is seeking a restaurant in a particular city.

The method of the invention so far has been described in relation with a speech recognition engine 161. According to the invention, similar advantages may be obtained in a system for a speaker recognition system, in which a list of candidate speakers may be dynamically retrieved from a remote system, and for a handwriting recognition method wherein candidate words may be dynamically downloaded from a central, up-to-date lexicon.

While the above described embodiment relates to a speech recognition engine 161 run in the user's personal equipment, for example in a user's mobile phone or PDA, at least some of the advantages of the invention could also be achieved by running the speech recognition engine in an intermediate equipment (not shown) between the speaker equipment 1 and the remote system 5 in which the lexicon is stored. The intermediate equipment may be a server, for example a server operated by the service provider, by the public telecommunication network operator or by the user or user's company.

The method of the invention suggests downloading speech recognition grammars, i.e. list of word with (possibly) associated probabilities to an equipment running a local speech recognition engine with local HMMs or neural networks. In an embodiment not forming part of the claimed invention, instead of sending a speech recognition grammar, the remote system 5 may send the recognition network, or elements for building or completing the recognition network. In an example, the central system 5 sends to the speaker equipment 1 at regular time frame, for example each 10 ms, everything the local Viterbi decoder needs to complete the currently searched Viterbi array.

## Claims

1. A speech recognition method for recognizing a word input in an equipment (1), comprising the steps of:
determining in said equipment (1) one or more symbols, wherein said one or more symbols is one or more of a letter, a numeral, an ASCII symbol, a speech segment derived from a speaker utterance or a speech feature derived from a speech segment derived from a speaker utterance,
sending said one or more symbols to a remote system (5),
receiving from said remote system (5) a grammar corresponding to a limited set of words depending on said one or more symbols,
recognizing said word in said equipment (1) using a speech recognition method constrained with said grammar.

2. The method of claim 1, wherein said word is recognized in said equipment (1) using locally stored HMMs or neural networks (17).

3. The method of claim 2, further comprising a step of adapting said locally stored HMMs or neural networks (17).

4. The method of one of the claims 1 to 3, wherein at least some of said symbols correspond to letters of said words entered over an haptic interface, for example a keyboard, a keypad, a touchpad, a mouse, a tactile display, a jog wheel or a stylus.

5. The method of one of the claims 1 to 4, wherein at least some of said symbols are acoustic symbols derived from a speaker utterance.

6. The method of claim 5, wherein said acoustic symbols comprise N-Best phonems derived from speech features derived a speaker utterance, with N>= 1.

7. The method of claim 6, whereas an acoustic distance is associated with said acoustic symbols.

8. The method of one of the preceding claims, wherein a probability is associated with at least some of said symbols.

9. The method of one of the claims 1 to 8, wherein said speech recognition methods are performed during a session, and wherein said limited set of words depends on fields previously recognized during said session.

10. The method of one of the claims 1 to 9, comprising the steps of:
determining in said equipment (1) other conditions (19) which said word must or is likely to fulfill,
sending said other conditions to said remote system (5),
wherein said grammar received from said remote system corresponds to a limited set of words depending on said symbols and on said locally determined other conditions.

11. The method of one of the claims 1 to 10, comprising the steps of:
determining in said remote system (5) other conditions which said word must or is likely to fulfill,
wherein said grammar received from said remote system (5) corresponds to a limited set of words depending on said symbols and on said remotely determined other conditions.

12. The method of one of the claims 10 to 11, wherein said other conditions include the dynamically determined location of said equipment (1), an identification of said speaker, previous requests made by said speaker and/or most frequent requests.

13. The method of one of the claims 1 to 12, wherein said grammar depends on the capabilities of said equipment (1) and/or on the available bandwidth.

14. The method of one of the claims 1 to 13, wherein said words in said grammars are ranked and/or associated with a probability.

15. The method of claim 14, wherein said probability depends on a distance between a location of said equipment (1) and a location related to said word, an identification of the user of said equipment, previous requests made by said speaker and/or most frequent requests made by said speaker or by all speakers.

16. The method of one of the claims 1 to 15, wherein a combination of said grammar received from said remote system with a locally available grammar is used in said equipment (1) for recognizing said word.

17. The method of one of the claims 1 to 16, wherein at least some of said symbols correspond to one or several first letters or phonemes of said word, and wherein said grammar corresponds to words beginning with said one or several first letters or phonemes.

18. The method of one of the claims 1 to 17 , wherein at least some of said symbols correspond to keys of said equipment (1), each key being associated with a set of several letters, wherein said grammar corresponds to words beginning with a combination of said sets.

19. The method of one of the claims 1 to 18, wherein at least some of said symbols correspond to one or several first letters or phonemes of said word, and wherein said grammar corresponds to words beginning with letters close to said first letters.

20. The method of one of the claims 1 to 19, further comprising the steps of:
receiving from said remote system (5) a list of candidates for the word a recognition engine (161) is trying to recognize,
displaying candidates from said list with said equipment (1),
manually choosing a word in said list.

21. The method of claim 20, wherein the set of words in said list is different from the set of words in said grammar.

22. The method of one the claims 20 to 21, wherein said words in said list are ranked according to their probability.

23. The method of claim 22, wherein said probability depends on a distance between a location of said equipment (1) and a location related to said word, an identification of the user of said equipment (1), previous requests made by said speaker and/or most frequent requests made by said speaker or by all speakers.

24. The method of one of the claims 1 to 23, wherein said speech recognition method used in said user's equipment for recognizing said word uses a Viterbi array depending both on acoustic symbols derived from the speaker's utterance and on symbols input over an haptic interface.

25. The method of one of the claims 1 to 24, wherein the speech recognition of said word in said equipment (1) starts before the complete grammar and/or list of words has been received.

26. A method of a remote system (5) for providing an equipment (1) with a grammar, **characterized by** the steps of:
receiving in the remote system (5) from said equipment (1) one or more symbols, wherein said one or more symbols is a letter, a numeral, an ASCII symbol, a speech segment derived from a speaker utterance or a speech feature derived from a speech segment derived from a speaker utterance,
creating a grammar corresponding to a limited set of words depending on said one or more symbols,
sending to said equipment (1) said created grammar.

27. The method according to claim 26 being an autocompletion method, wherein the one or more symbol is one or more acoustic symbol, wherein the method comprises the following step:
sending a request with said one or more acoustic symbol to a database (37) in order to retrieve from said database a speech recognition grammar corresponding to the limited set of words depending on said one or more acoustic symbols, wherein an autocompletion method is used in the remote system (5) for building said speech recognition grammar.

28. The method of claim 27, wherein said one or moreacoustic symbols correspond to the first few letters of said words.

29. The method of one of the claims 27 to 28, further comprising the steps of:
receiving from said equipment (1) at least one or more supplementary symbols corresponding to letters,
retrieving from said database said speech recognition grammar which depends both on said one or moreacoustic symbols and on said one or more supplementary symbols.

30. The method of one of the claims 27 to 29, further comprising the step of:
determining at least one supplementary condition for said speech recognition grammars,
wherein said grammar retrieved from said database (37)
depends on said one or more symbols and on said locally determined at least one condition.

31. The method of claim 30, wherein said at least one condition includes words previously recognized during a same session,
wherein said previously recognized words correspond to a different field in said database and are used for restricting the set of words.

32. The method of one of the claims 27 to 31, further comprising a step of retrieving from said database (37) a list of possible words corresponding to said one or more symbols, and a step of sending said list to said equipment (1).

33. The method of one of the claims 27 to 32, further comprising the step of:
determining capabilities of said equipment and/or the bandwidth available for transmitting said grammar,
determining said grammar as a function of said capabilities and/or bandwidth.

34. The method of one of the claims 27 to 33, wherein said database corresponds to a directory of names.

35. A remote system (5) for providing an equipment (1) with a grammar, **characterized by**:
means for receiving from said equipment (1) one or more symbols, wherein said symbol is a letter, a numeral, an ASCII symbol, a speech segment derived from a speaker utterance or a speech feature derived from a speech segment derived from a speaker utterance,
means for creating a grammar corresponding to a limited set of words depending on said one or more symbols,
means for sending to said equipment (1) said created grammar.

## Patentansprüche

1. Ein Spracherkennungsverfahren zum Erkennen einer Worteingabe in einem Gerät (1), aufweisend die Schritte :
Bestimmen in dem Gerät (1) eines oder mehrerer Symbole, wobei das ein oder mehrere Symbole ein oder mehr eines Buchstabes, einer Ziffer, eines ASCII Symbols, einer von einer Sprecheräußerung abgeleiteten Sprachsegments oder eines Sprachmerkmals, das von einem von einer Sprecheräußerung abgeleitetem Sprachsegment abgeleitet wurde, ist,
Senden des einen oder der mehreren Symbole an ein entferntes Systems (5),
Empfangen einer Grammatik entsprechend einer begrenzten Menge von Wörtern abhängend von dem einen oder mehreren Symbolen von dem entfernten System (5),
Erkennen des Worts in dem Gerät (1) unter Verwendung eines Spracherkennungsverfahrens eingeschränkt durch die Grammatik.

2. Das Verfahren nach Anspruch 1, wobei das Wort in dem Gerät (1) unter Verwendung von gespeicherten HMMs oder neuronalen Netzwerken (17) erkannt wird.

3. Das Verfahren nach Anspruch 2, weiter aufweisend einen Schritt des Anpassens der local gespeicherten HMMs oder neuronalen Netzwerke (17).

4. Das Verfahren nach einem der Ansprüche 1 bis 3, wobei mindestens einige der Symbole den Buchstaben der Wörter, die über eine haptische Schnittstelle, zum Beispiel eine Tastatur, ein Tastfeld, ein berührungssensitives Feld, eine Maus, ein taktiler Bildschirm, ein Jogwheel oder ein Stift, eingegeben wurden, entsprechen.

5. Das Verfahren nach einem der Ansprüche 1 bis 4, wobei mindestens einige der Symbole akustische Symbole, die von einer Sprecheräußerung abgeleitet wurden, sind.

6. Das Verfahren nach Anspruch 5, wobei die akustischen Symbole die N besten Phoneme, die von einer Sprecheräußerung abgeleitet wurden, aufweisen, mit N>=1.

7. Das Verfahren nach Anspruch 6, wobei eine akustische Distanz mit dem akustischen Symbol assoziiert wird.

8. Das Verfahren nach einem der vorigen Ansprüche, wobei eine Wahrscheinlichkeit mit mindestens einem der Symbole assoziiert wird.

9. Das Verfahren nach einem der Ansprüche 1 bis 8, wobei das Spracherkennungsverfahren während einer Sitzung durchgeführt wird, und wobei die begrenzte Anzahl von Worten von zuvor in der Sitzung erkannten Feldern abhängt.

10. Das Verfahren nach einem der Ansprüche 1 bis 9, aufweisend die Schritte:
Bestimmen in dem Gerät (1) andere Bedingungen (1), die das Wort erfüllen muss oder wahrscheinlich erfüllt,
Senden der anderen Bedingungen an das entfernte System (5),
wobei die von dem entfernten System empfangene Grammatik einer begrenzten Anzahl von Worten entspricht, die von den Symbolen und von den lokal bestimmten anderen Bedingungen abhängt.

11. Das Verfahren nach einem der Ansprüche 1 bis 10, aufweisend die Schritte:
Bestimmen in dem Gerät (1) andere Bedingungen (1), die das Wort erfüllen muss oder wahrscheinlich erfüllt,
wobei die von dem entfernten System empfangene Grammatik einer begrenzten Anzahl von Worten entspricht, die von den Symbolen und von den lokal bestimmten anderen Bedingungen abhängt.

12. Das Verfahren nach einem der Ansprüche 10 bis 11, wobei die andere Bedingung den dynamisch bestimmten Ort des Geräts (1), eine Identifikation eines Sprechers, vorige durch den Sprecher gestellte Anfragen und/oder die häufigsten Anfragen beinhaltet.

13. Das Verfahren nach einem der Ansprüche 1 bis 12, wobei die Grammatik von der Fähigkeit des Geräts (1) und/oder von der verfügbaren Bandbreite abhängt.

14. Das Verfahren nach einem der Ansprüche 1 bis 13, wobei die Worte in der Grammatik einem Rang zugeordnet werden und oder einer Wahrscheinlichkeit zugeordnet werden.

15. Das Verfahren nach Anspruch 14, wobei die Wahrscheinlichkeit von einem Abstand zwischen einem Ort des Geräts (1) und einem Ort in Bezug auf das Wort, von einer Identifikation des Benutzers des Geräts, vorigen Anfragen durch den Sprecher und/oder die häufigsten Anfragen des Sprechers oder aller Sprecher abhängt.

16. Das Verfahren nach einem der Ansprüche 1 bis 16, wobei eine Kombination der von dem entfernten System empfangenen Grammatik mit einer lokal verfügbaren Grammatik in dem Gerät (1) für die Erkennung des Worts benutzt wird.

17. Das Verfahren nach einem der Ansprüche 1 bis 16, wobei mindestens ein paar der Symbole einer oder mehreren Buchstaben oder Phonemen von Wörtern entsprechen, und wobei die Grammatik Wörtern entspricht, die mit dem einen oder mehreren ersten Buchstaben oder Phonemen beginnt.

18. Das Verfahren nach einem der Ansprüche 1 bis 17, wobei mindestens ein paar der Symbole Tasten des Geräts (1) entsprechen, wobei jede Taste mit einer Menge von einigen Buchstaben assoziiert wird, wobei die Grammatik Worten entspricht, die mit einer Kombination der Menge beginnt.

19. Das Verfahren nach einem der Ansprüche 1 bis 18, wobei mindestens ein paar der Symbole einer oder mehreren Buchstaben oder Phonemen von Wörtern entsprechen, und wobei die Grammatik Wörtern entspricht, die mit Buchstaben beginnen, die dem einen oder mehreren ersten Buchstaben nahe sind, beginnt.

20. Das Verfahren nach einem der Ansprüche 1 bis 19, weiter aufweisend die Schritte:
Empfangen einer Liste von Kandidaten für das Wort, das eine Erkennungsmaschine (161) versucht zu erkennen, von dem entfernten System (5),
Anzeigen der Kandidaten der Liste mit dem Gerät (1),
manuelles auswählen eines Worts in der Liste.

21. Das Verfahren nach Anspruch 20, wobei die Menge der Wörter in der Liste sich von der Menge der Wörter der Grammatik unterscheidet.

22. Das Verfahren nach Anspruch 20 oder 21, wobei die Wörter in der Liste nach deren Wahrscheinlichkeit geordnet sind.

23. Das Verfahren nach Anspruch 22, wobei die Wahrscheinlichkeit von einem Abstand zwischen einem Ort des Geräts (1) und einem Ort in Bezug auf das Wort, von einer Identifikation des Benutzers des Geräts, vorigen Anfragen durch den Sprecher und/oder die häufigsten Anfragen des Sprechers oder aller Sprecher abhängt.

24. Das Verfahren nach einem der Ansprüche 1 bis 23, wobei das in dem Gerät des Benutzers für die Erkennung des Worts benutzte Spracherkennungsverfahren ein Viterbi Feld, das sowohl von von der Sprecheräußerung abgeleiteten akustischen Symbolen und von über die haptische Schnittstelle eingegebenen Symbolen abhängt, benutzt.

25. Das Verfahren nach einem der Ansprüche 1 bis 24, wobei die Spracherkennung des Worts in dem Gerät startet, bevor die komplette Grammatik und/oder Liste von Wörtern empfangen wird.

26. Ein Verfahren eines entfernten Systems (5) zum Bereitstellen einer Grammatik für ein Gerät (1), **gekennzeichnet durch** die Schritte :
Empfangen in dem entfernten System (5) von dem Gerät (1) eines oder mehrerer Symbole, wobei das eine oder mehrere Symbol ein Buchstabe, eine Ziffer, ein ASCII Symbol, ein von einer Sprecheräußerung abgeleitetes Sprachsegment oder ein Sprachmerkmal, das von einem von einer Sprecheräußerung abgeleitetem Sprachsegment abgeleitet wurde, ist,
Erzeugen einer Grammatik entsprechend einer begrenzten Menge von Wörtern in Abhängigkeit von dem einem oder mehreren Symbol,
Senden der Grammatik zu dem Gerät (1).

27. Das Verfahren nach Anspruch 26 ist ein automatisches Vervollständigungsverfahren, wobei das eine oder mehrere Symbol ein oder mehrere akustische Signale ist, wobei das Verfahren die folgenden Schritte aufweist:
Senden einer Anfrage mit dem einen oder mehreren Symbolen an eine Datenbank (37), um von der Datenbank eine Spracherkennungsgrammatik entsprechend der begrenzten Menge von Wörtern in Abhängigkeit von dem einem oder mehreren akustischen Symbolen zu erhalten.

28. Das Verfahren nach Anspruch 27, wobei das eine oder mehrere akustischen Symbol den ersten Buchstaben der Worte entspricht.

29. Das Verfahren nach einem der Ansprüche 27 bis 28 weiter aufweisend die Schritte:
Empfangen von dem Gerät mindestens ein oder mehrere zusätzliche Symbole, die Buchstaben entsprechen,
Erlangen der Spracherkennungsgrammatik, die sowohl von dem einen oder mehreren akustischen Symbolen als auch von dem einen oder mehreren zusätzlichen Symbol abhängt.

30. Das Verfahren nach einem der Ansprüche 27 bis 29, weiter aufweisend den Schritt:
Bestimmen mindestens einer zusätzlichen Bedingung für die Spracherkennungsgrammatik,
wobei die Grammatik von der Datenbank (37) von dem einen oder mehreren Symbolen und von der lokal bestimmten Bedingung abhängt.

31. Das Verfahren nach Anspruch 30, wobei die mindestens eine Bedingung in der gleichen Sitzung zuvor erkannte Wörter aufweist,
wobei die zuvor erkannten Wörter einem anderen Feld in der Datenbank entspricht und für die Einschränkung der Wortmenge verwendet wird.

32. Das Verfahren nach einem der Ansprüche 27 bis 31, weiter aufweisend den Schritt des Empfangens von der Datenbank (37) eine Liste von möglichen Wörtern entsprechend des einen oder mehreren Symbols, und aufweisend den Schritt des Sendens der Liste an das Gerät (1).

33. Das Verfahren nach einem der Ansprüche 27 bis 32, weiter aufweisend den Schritt:
Bestimmen der Fähigkeiten des Geräts und/oder der für die Übertragung der Grammatik verfügbare Bandbreite,
Bestimmen der Grammatik als Funktion der Fähigkeiten und/oder der Bandbreite.

34. Das Verfahren nach einem der Ansprüche 27 bis 33, wobei die Datenbank einer einem Ordner mit Namen entspricht.

35. Ein entferntes System (5) zum Bereitstellen einer Grammatik für ein Gerät (1), **gekennzeichnet durch** :
Mittel zum Empfangen von dem Gerät (1) eines oder mehrerer Symbole, wobei das eine oder mehrere Symbol ein Buchstabe, eine Ziffer, ein ASCII Symbol, ein von einer Sprecheräußerung abgeleitetes Sprachsegment oder ein Sprachmerkmal, das von einem von einer Sprecheräußerung abgeleitetem Sprachsegment abgeleitet wurde, ist,
Mittel zum Erzeugen einer Grammatik entsprechend einer begrenzten Menge von Wörtern in Abhängigkeit von dem einem oder mehreren Symbol,
Mittel zum Senden der Grammatik zu dem Gerät (1).

## Revendications

1. Procédé de reconnaissance de la parole pour reconnaître une entrée de mots dans un matériel (1), comprenant les étapes consistant à :
déterminer dans ledit matériel (1) un ou plusieurs symboles, ledit ou lesdits symboles étant un ou plusieurs des éléments suivants : une lettre, un chiffre, un symbole ASCII, un segment de parole obtenu à partir d'un énoncé d'un locuteur ou une caractéristique de parole obtenue à partir d'un segment de parole obtenu à partir d'un énoncé d'un locuteur,
l'envoi desdits un ou plusieurs symboles à un système distant (5),
la réception en provenance dudit système distant (5) d'une grammaire correspondant à un ensemble limité de mots dépendant dudit ou desdits symboles,
la reconnaissance dudit mot dans ledit matériel (1) en utilisant un procédé de reconnaissance de la parole limité avec ladite grammaire.

2. Procédé selon la revendication 1, dans lequel ledit mot est reconnu dans ledit matériel (1) en utilisant des modèles de Markov cachés ou des réseaux neuronaux stockés localement.

3. Procédé selon la revendication 2, comprenant en outre une étape consistant à adapter lesdits modèles de Markov cachés et réseaux neuronaux stockés localement.

4. Procédé selon l'une quelconque des revendications 1 à 3, dans lequel au moins quelques-uns desdits symboles correspondent à des lettres desdits mots entrés sur une interface haptique, par exemple un clavier, un pavé tactile, une souris, un affichage tactile, une molette de navigation ou un stylet.

5. Procédé selon l'une quelconque des revendications 1 à 4, dans lequel au moins quelques-uns desdits symboles sont des symboles acoustiques obtenus à partir d'un énoncé d'un locuteur.

6. Procédé selon la revendication 5, dans lequel lesdits symboles acoustiques comprennent N meilleurs phonèmes obtenus à partir de caractéristiques de parole obtenues à partir d'un énoncé d'un locuteur, avec N >= 1.

7. Procédé selon la revendication 6, dans lequel une distance acoustique est associée auxdits symboles acoustiques.

8. Procédé selon l'une quelconque des revendications précédentes, dans lequel une probabilité est associée à au moins quelques-uns desdits symboles.

9. Procédé selon l'une quelconque des revendications 1 à 8, dans lequel lesdits procédés de reconnaissance de la parole sont exécutés pendant une session, et dans lequel ledit ensemble limité de mots dépend de champs reconnus antérieurement pendant ladite session.

10. Procédé selon l'une quelconque des revendications 1 à 9, comprenant les étapes consistant à :
déterminer dans ledit matériel (1) d'autres conditions (19) que ledit mot doit remplir ou est susceptible de remplir.
envoyer lesdites autres conditions audit système distant (5),
dans lequel ladite grammaire reçue dudit système distant correspond à un ensemble limité de mots dépendant desdits symboles et des dites autres conditions déterminées localement.

11. Procédé selon l'une quelconque des revendications 1 à 10, comprenant les étapes consistant à :
déterminer dans ledit système distant (5) d'autres conditions que ledit mot doit remplir ou est susceptible de remplir,
dans lequel ladite grammaire reçue dudit système distant (5) correspond à un ensemble limité de mots dépendant desdits symboles et des dites autres conditions déterminées à distance.

12. Procédé selon l'une quelconque des revendications 10 à 11, dans lequel lesdites autres conditions comprennent l'emplacement déterminé dynamiquement dudit matériel (1), une identification dudit locuteur, des demandes antérieures faites par ledit locuteur et/ou les demandes les plus fréquentes.

13. Procédé selon l'une quelconque des revendications 1 à 12, dans lequel ladite grammaire dépend des capacités dudit matériel (1) et/ou de la largeur de bande disponible.

14. Procédé selon l'une quelconque des revendications 1 à 13, dans lequel lesdits mots dans lesdites grammaires sont classées et/ou associées à une probabilité.

15. Procédé selon la revendication 14, dans lequel ladite probabilité dépend d'une distance entre un emplacement dudit matériel (1) et un emplacement lié audit mot, d'une identification de l'utilisateur dudit matériel, de demandes antérieures faites par ledit locuteur et/ou des demandes les plus fréquentes faites par ledit locuteur ou par tous les locuteurs.

16. Procédé selon l'une quelconque des revendications 1 à 15, dans lequel une combinaison de ladite grammaire reçue dudit système distant avec une grammaire disponible localement est utilisée dans ledit matériel (1) pour reconnaître ledit mot.

17. Procédé selon l'une quelconque des revendications 1 à 16, dans lequel au moins quelques-uns desdits symboles correspondent à une ou à plusieurs premières lettres ou phonèmes dudit mot, et dans lequel ladite grammaire correspond à des mots commençant par ladite une ou lesdites plusieurs lettres ou phonèmes.

18. Procédé selon l'une quelconque des revendications 1 à 17, dans lequel au moins quelques-uns desdits symboles correspondent à des touches dudit matériel (1), chaque touche étant associée à un ensemble de plusieurs lettres, ladite grammaire correspondant à des mots commençant avec une combinaison desdits ensembles.

19. Procédé selon l'une quelconque des revendications 1 à 18, dans lequel au moins quelques-uns desdits symboles correspondent à une ou à plusieurs premières lettres ou phonèmes dudit mot, et dans lequel ladite grammaire correspond à des mots commençant par des lettres proches desdites premières lettres.

20. Procédé selon l'une quelconque des revendications 1 à 19, comprenant en outre les étapes consistant à :
recevoir dudit système distant (5) une liste de candidats pour le mot qu'un moteur de reconnaissance (161) essaie de reconnaître,
afficher des candidats dans ladite liste avec ledit matériel (1),
choisir manuellement un mot dans ladite liste.

21. Procédé selon la revendication 20, dans lequel l'ensemble de mots dans ladite liste est différent de l'ensemble de mots dans ladite grammaire.

22. Procédé selon l'une quelconque des revendications 20 à 21, dans lequel lesdits mots dans ladite liste sont classés selon leur probabilité.

23. Procédé selon la revendication 22, dans lequel ladite probabilité dépend d'une distance entre un emplacement dudit matériel (1) et un emplacement lié audit mot, d'une identification de l'utilisateur dudit matériel, de demandes antérieures faites par ledit locuteur et/ou des demandes les plus fréquentes faites par ledit locuteur ou par tous les locuteurs.

24. Procédé selon l'une quelconque des revendications 1 à 23, ledit procédé de reconnaissance de la parole utilisé dans ledit matériel de l'utilisateur pour reconnaître ledit mot utilisant un tableau de Viterbi dépendant des symboles acoustiques obtenus à partir de l'énoncé du locuteur et des symboles entrés sur une interface haptique.

25. Procédé selon l'une quelconque des revendications 1 à 24, dans lequel la reconnaissance de la parole dudit mot dans ledit matériel (1) commence avant que la grammaire complète et/ou la liste de mots n'aient été reçues.

26. Procédé d'un système distant (5) pour fournir une grammaire à un matériel (1), **caractérisé par** les étapes consistant à :
recevoir dans le système distant (5) en provenance dudit matériel (1) un ou plusieurs symboles, ledit ou lesdits symboles étant une lettre, un chiffre, un symbole ASCII, un segment de parole obtenu à partir d'un énoncé d'un locuteur ou une caractéristique de parole obtenue à partir d'un segment de parole obtenu à partir d'un énoncé d'un locuteur,
créer une grammaire correspondant à un ensemble limité de mots dépendant desdits un ou plusieurs symboles,
envoyer audit matériel (1) ladite grammaire créée.

27. Procédé selon la revendication 26 étant un procédé à exécution automatique, dans lequel le ou les symboles sont un ou plusieurs symboles acoustiques, ce procédé comprenant l'étape suivante :
l'envoi d'une demande avec ledit ou lesdits symboles acoustiques à une base de données (37) de façon à extraire de ladite base de données une grammaire de reconnaissance de la parole correspondant à l'ensemble limité de mots dépendant dudit ou desdits symboles acoustiques, un procédé à exécution automatique étant utilisé dans le système distant (5) pour construire ladite grammaire de reconnaissance de la parole.

28. Procédé selon la revendication 27, dans lequel ledit ou lesdits symboles acoustiques correspondent aux quelques premières lettres desdits mots.

29. Procédé selon l'une quelconque des revendications 27 à 28, comprenant en outre les étapes consistant à :
recevoir dudit matériel (1) au moins un ou plusieurs symboles supplémentaires correspondant à des lettres,
extraire de ladite base de données ladite grammaire de reconnaissance de la parole qui dépend à la fois dudit ou desdits symboles acoustiques et dudit ou desdits symboles supplémentaires.

30. Procédé selon l'une quelconque des revendications 27 à 29, comprenant en outre l'étape consistant à :
déterminer au moins une condition supplémentaire pour ladite grammaire de reconnaissance de la parole,
ladite grammaire extraite de ladite base de données (37) dépendant dudit ou desdits symboles et de ladite au moins une condition déterminée localement.

31. Procédé selon la revendication 30, dans lequel ladite au moins une condition comprend des mots reconnus antérieurement pendant une même session,
lesdits mots reconnus antérieurement correspondant à un champ différent dans ladite base de données et étant utilisés pour limiter l'ensemble de mots.

32. Procédé selon l'une quelconque des revendications 27 à 31, comprenant en outre une étape d'extraction de ladite base de données (37) d'une liste de mots possibles correspondant audit ou auxdits symboles, et une étape consistant à envoyer ladite liste audit matériel (1).

33. Procédé selon l'une quelconque des revendications 27 à 32, comprenant en outre l'étape consistant à :
déterminer les capacités dudit matériel et/ou la largeur de bande disponible pour transmettre ladite grammaire,
déterminer ladite grammaire en fonction desdites capacités et/ou de ladite largeur de bande.

34. Procédé selon l'une quelconque des revendications 27 à 33, dans lequel ladite base de données correspond à un répertoire de noms.

35. Système distant (5) pour fournir une grammaire à un matériel (1), **caractérisé par** :
un moyen pour recevoir dudit matériel distant (1) un ou plusieurs symboles, ledit symbole étant une lettre, un chiffre, un symbole ASCII, un segment de parole obtenu à partir d'un énoncé d'un locuteur ou une caractéristique de parole obtenue à partir d'un segment de parole obtenu à partir d'un énoncé d'un locuteur,
un moyen pour créer une grammaire correspondant à un ensemble limité de mots dépendant dudit ou desdits symboles,
un moyen pour envoyer audit matériel (1) ladite grammaire créée.
